# EUROPEAN PATENT APPLICATION

(11) **EP 4 575 623 A1**
(43) Date of publication of application: **25.06.2025**
(21) Application number: 23217588.5
(22) Date of filing: 18.12.2023
(51) Int. Cl.: G02F 1/133, G02F 1/167, G02F 1/1685, H02J 9/04

(54) **DYNAMIC GLAZING WITH EMERGENCY INCREASE IN TRANSPARENCY**

(71) Applicant: eLstar Dynamics Patents B.V., 3235 CD Rockanje (NL)
(72) Inventor: MASSARD, Romaric Mathieu, 5651 GW Eindhoven (NL); SLACK, Anthony John, 83510 Lorgues (FR)
(74) Representative: DeltaPatents B.V.

(57) **Abstract**

Some embodiments are directed to dynamic glazing supporting multiple states of different transparency. The dynamic glazing has a connection to an electrical emergency energy storage. An emergency increase in transparency is effected in case of a loss of connection to a main power supply by applying energy from the emergency energy storage.

## Description

### TECHNICAL FIELD

The presently disclosed subject matter relates to dynamic glazing, a method for dynamic glazing, a computer readable medium.

### BACKGROUND

Dynamic glazing, also known as smart glass or switchable glass, offers the ability to alter its light transmission in response to an electric signal. For example, dynamic glazing may be integrated into the facade of a building to optimize daylight, enhance thermal comfort, and reduce energy costs by reducing the need for artificial lighting and temperature control systems. Similarly, in the automotive sector, dynamic glazing is utilized in car windows and sunroofs to regulate the interior climate, mitigate glare, and enhance the privacy and security of passengers. In aviation, its application in aircraft windows serves to improve passenger comfort by controlling cabin illumination and reducing the reliance on window shades.

Dynamic glazing systems are typically composed of a substrate material incorporated with an optical layer that changes properties in response to an electrical voltage. The transition between states with different transparency may be effected by electrochromic materials, suspended particle devices, liquid crystal devices, or micro-blind structures, etc. These technologies enable users to adjust the tint of glazing electronically, presenting a modern alternative to traditional mechanical blinds or shades.

Despite the advancements in dynamic glazing technology, a significant limitation persists: the default state during a power loss. Most dynamic glazing systems revert to an opaque state when unpowered due to the natural disposition of the active materials to return to their original, non-transparent state in the absence of an electrical charge. This default mode, especially if it is a darkened state, can be suboptimal for several reasons:
For example, in buildings, a sudden transition to opacity during power outages can impede natural lighting, necessitating the use of emergency lighting systems. This can be inconvenient for occupants and can lead to increased costs and energy consumption. In vehicles, particularly cars, the sudden opacification of windows can obstruct the driver's visibility, posing a potential hazard by impeding the ability to see road conditions, traffic signals, and other vehicles. Also in case of a crash, it is important for rescue workers to be able to see into the car. In airplanes, the loss of transparency in windows may not only compromise passenger experience but also inhibit rescue workers to see into the plane, as well as the crew's ability to visually assess external conditions in the event of electronic failure, which could be detrimental during emergency procedures.

Thus, there exists a need for an improved dynamic glazing system that maintains a fail-safe mode of transparency or semi-transparency when power is lost, to mitigate the risks associated with a default opaque state.

### SUMMARY

It would be advantageous to have improved dynamic glazing.

In an embodiment, the dynamic glazing comprises a connection to an electrical emergency energy storage. In case of a loss of connection to a main power supply, the dynamic glazing effects an emergency increase in transparency by applying energy from the emergency energy storage

A further aspect is a dynamic glazing method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figures 1a-1b schematically show an example of an embodiment of a light modulator suitable for dynamic glazing,
Figure 1c schematically shows an example of an embodiment of a car,
Figure 1d schematically shows an example of an embodiment of an airplane window,
Figures 2a-2c schematically show an embodiment of a light modulator suitable for dynamic glazing,
Figures 3a-3f schematically show an example of an embodiment of dynamic glazing system,
Figure 3g schematically show an example of an embodiment of electrodes and induction points,
Figure 3h schematically show an example of an embodiment of electrodes and induction points,
Figure 4 schematically shows an example of an embodiment of a dynamic glazing method,
Figure 5a schematically shows a computer readable medium having a writable part comprising a computer program according to an embodiment,
Figure 5b schematically shows a representation of a processor system according to an embodiment.

### Reference signs list

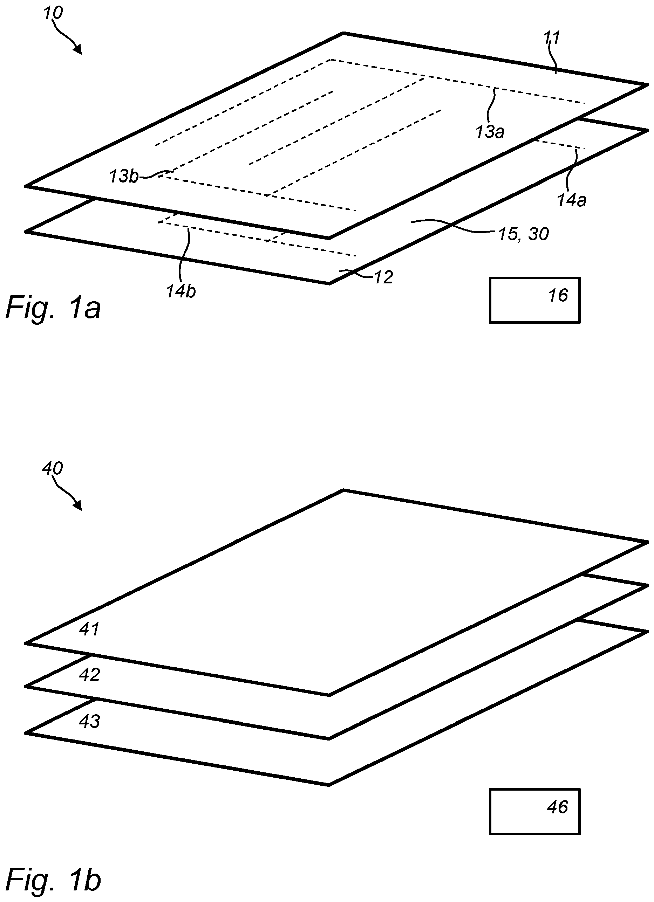

The following list of references and abbreviations corresponds to figures 1a-3e, 5a-5b and is provided for facilitating the interpretation of the drawings and shall not be construed as limiting the claims.
- 10: light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a dynamic glazing
- 22: an airplane window
- 23: a dynamic glazing
- 24: a user control
- 40: a light modulator 10
- 41: a first substrate
- 42: a second substrate
- 43: a third substrate
- 46: a controller

- 200-204: a dynamic glazing system
- 210: a light modulator
- 211: inductive coupling points
- 212.1, 213.1: a first inductive coupling point
- 212.2, 213.2: a second inductive coupling point

- 220: a main power supply
- 230: an electrical emergency energy storage
- 231: a first emergency energy storage
- 232: a second emergency energy storage
- 240: a controller
- 241: an interconnect
- 242: main power supply connection
- 250: an external inductive device
- 261, 262: a second emergency energy storage
- 263, 264: an electrode arrangement

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Dynamic glazing, also known as smart glazing, includes a light modulator in glazing. Dynamic glazing may be applied in domestic housing, offices, greenhouses, cars, and the like. The level of transparency or reflectivity of the dynamic glazing can be adapted electrically. Dynamic glazing comprises a light modulator that is configured to dynamically adjust its transparency. Changing the transparency requires electrical energy, for example, obtained from a main power supply or an emergency energy storage. The light modulator may be configured to adjust its transparency in response to an electrical signal, e.g., from a controller.

For example, an embodiment of a light modulator comprises a
- first substrate and a second substate facing each other, one or more electrodes extending in a two-dimensional pattern across the first substrate and/or one or more electrodes extending in a two-dimensional pattern across the second substrate, and
- an optical layer between the first and second substrates, the optical layer comprising a fluid comprising particles.

The particles may be electrically charged or chargeable, e.g., in an electrophoretic light modulator.

To change transparency in the light modulator, an electric potential may be applied to the one or more electrodes to obtain an electric field at the one or more electrodes. This provides movement of the particles towards or from the one more electrodes effecting an increase in transparency or a decrease in transparency.

In an embodiment, the dynamic glazing may comprise additional elements beyond the light modulator. For example, the dynamic glazing may comprise one or both of the following elements:
- an insulation layer configured to thermally insulate the light modulator, e.g., to enhance energy efficiency of the glazing system,
- a frame assembly structured to encase the light modulator and optionally the insulation layer, the frame assembly being adapted for engagement with other structure components, such as, e.g., a window recess. The structure components may be parts external to the dynamic glazing configured to allow installation of the dynamic glazing, e.g., in a building or vehicle.

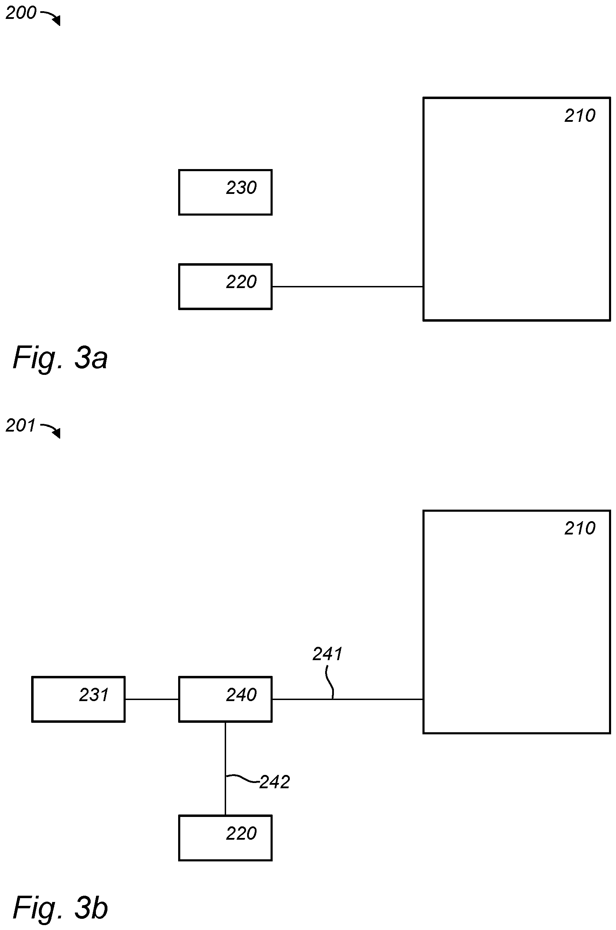

In an embodiment, the dynamic glazing comprises a light modulator and a connection to an electrical emergency energy storage. This allows the light modulator for an emergency increase in transparency using energy from the main power supply as well as from an emergency energy storage. Thus, if connection to the main power supply is lost, the dynamic glazing is able to increase transparency. The use of emergency energy storage, e.g., emergency electric energy storage, is discussed below, and in particular in the context of figures 3a-3e. Light modulator embodiments are further discussed below.

For example, an embodiment of dynamic glazing, comprises an optical modulator configured to dynamically adjust its optical properties, an optional insulation layer configured to thermally insulate the optical modulator, and a frame assembly arranged to encase the optical modulator and the insulation layer. For example, the frame assembly may be arranged for engagement with building or vehicle components, e.g., a window recess. The glazing comprises a connection to a main power supply to provide electrical power to the optical modulator. The glazing comprises a connection to an electrical emergency energy storage, which is configured to provide electrical power to the optical modulator.

The emergency energy storage may be integrated with the dynamic glazing, or it may be integrated with the dynamic glazing. For example, the electrical energy storage may be integrated into the frame assembly. For example, the electrical energy storage may be embedded within the insulation layer. For example, the electrical energy storage the frame may comprise an interface for (preferably removably) housing the electrical energy storage, allowing replacement of the electrical energy storage. For example, the electrical energy storage may be positioned within the building structure adjacent to the dynamic glazing system, e.g., concealed from view.

Embodiments of light modulators are described herein that may be combined with a connection to an electrical emergency energy storage.

In an embodiment, a light modulator comprises a first substrate, a second substrate arranged opposite the first substrate, an electrode system extending across at least the first substrate on a side facing the second substrate. Extending between the first and second substrate is an optical layer that comprises a fluid that comprises particles. By applying an electric potential to the electrode system an electric field in the optical layer is modulated which in turn causes movement of the particles in the optical layer. As a result of a new distribution of the particles in the optical layer, light that passes through the substrates is modulated-typically visibly so. An electrode system extending across a substrate may comprise one or more electrodes extending across the substrate. An electrode system may be applied to one of the first and second substrates, or to both of the first and second substrates. Typically, the electrode systems are applied to a side of a substrate facing the optical layer, and may be in fluidic contact, though neither is necessary.

Many embodiments of light modulators are possible. For example, the particles may be moved through electrophoretic and/or through dielectrophoretic forces. For example, various types of optical layers, and electrode system are possible. Some types of optical layers use an electrode system with two electrodes, one on each side, some use three electrodes, with 2 on one side and 1 on the other. Some optical layers and electrode system use 4 or even more electrodes. We will refer to embodiments as a two-electrode, three-electrode, or four-electrode to refer to the type of optical layer.

Furthermore, the electrical emergency energy storage may be of various types, and variously arranged. For example, the electrical emergency energy storage may be combined with a controller, and/or directly integrated with the dynamic glazing, e.g., the light modulator.

Substrates are disclosed, e.g., for use in a light modulator, in particular, dynamic glazing. The substrate is transparent, and at least one electrode is applied to a side of the substrate, the electrode extending in a pattern across the side of the first substrate. Both substrates are transparent.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

Figures 1a- 2c provide various examples of light modulators. Figures 3a and following focus on the electrical emergency energy storage, and/or how the electrode system may interact with it.

Electrophoretic light modulators are explained more extensively herein and are used as the motivating example. In an embodiment, a light modulator comprises a first substrate and a second substrate. At least one of the first and second substrate may be according to an embodiment, having a perforated electrode. For example, the first and second substrates may be arranged with inner sides opposite to each other. Using a substrate according to an embodiment has, e.g., the effect of reducing optical interference. An optical layer is arranged between the first and second substrates. The electrode is arranged to modulate an electrical field in the optical layer. The optical layer comprises a fluid comprising particles, wherein the particles are electrically charged or chargeable. The particles may be moved under control of the electrical field. For example, a controller may be configured to apply an electric potential to the electrode to obtain an electro-magnetic field at the electrode providing electrophoretic movement of the particles towards or from one of the at least one electrode causing modulation of the optical properties of the light modulator.

Below a number of known light modulators are reviewed, showing some of the options in technology and electrodes. These known substrates can advantageously be modified by perforating the electrodes, reducing electrode resistance and opacity. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. Accumulation electrode and/or field electrode may be perforated.

US patent 10921678 with title `Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electro-magnetic field to the field electrode and the accumulation electrode provides movement of the particles from the field electrode and the accumulation electrode and vice versa. Any of these cited electrophoretic or dielectrophoretic light modulators may be adapted by including an electrical emergency energy storage, or connection thereto.

US patent 8054535B2 (included herein by reference) and US patent 8384659b2 (included herein by reference) show alternative examples of electrophoretic light modulators wherein one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited light modulators may be adapted by including an electrical emergency energy storage, or connection thereto.

The paper "Reversible Metal Electrodeposition Devices: An Emerging Approach to Effective Light Modulation and Thermal Management", included by reference, also shows a substrate on which a patterned electrode is applied. An electrical emergency energy storage according to an embodiment may be included herein.

An embodiment of a substrate may be used in an electrochromic device (ECD). An electrochromic device (ECD) controls optical properties such as optical transmission, absorption, reflectance and/or emittance in a continual but reversible manner on application of voltage (electrochromism). This property enables an electrochromic device to be used for applications like smart glass, electrochromic mirrors, and electrochromic display devices. An electrical emergency energy storage according to an embodiment may be included herein.

An electrochromic device is described, e.g., in the paper "Silver grid electrodes for faster switching ITO free electrochromic devices" by António Califórnia et al., included herein by reference. The paper describes the preparation of an electrochromic device, in this case one which is ITO free. An electrical emergency energy storage according to an embodiment may be included herein.

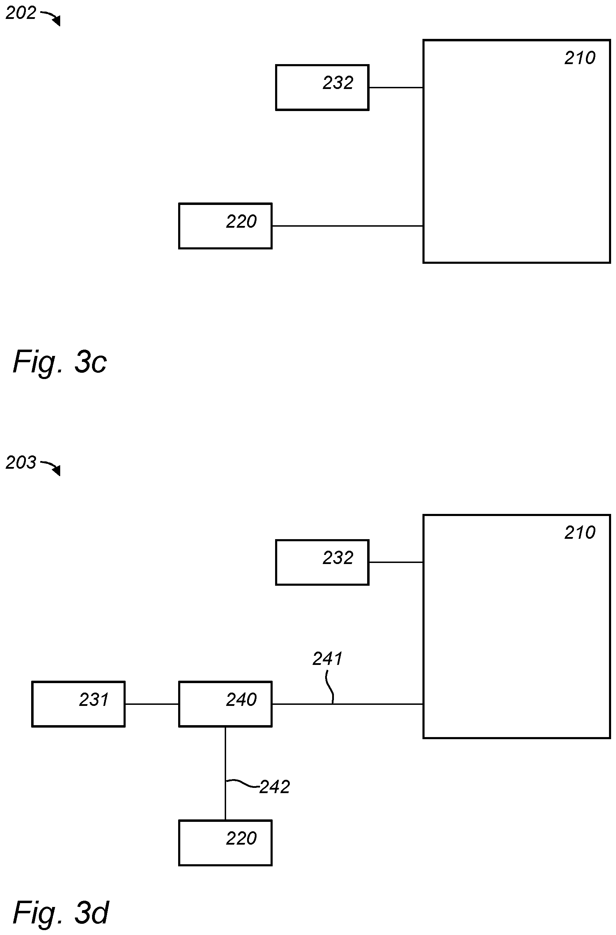

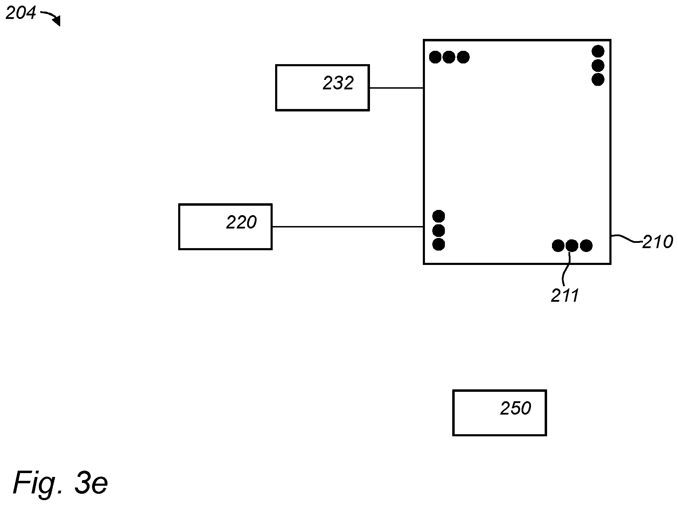

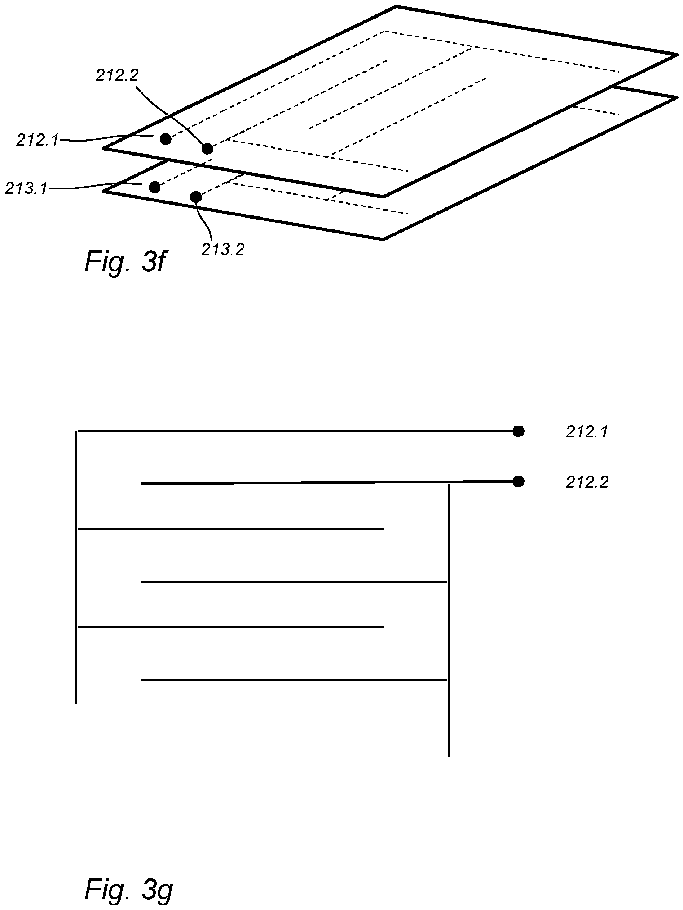

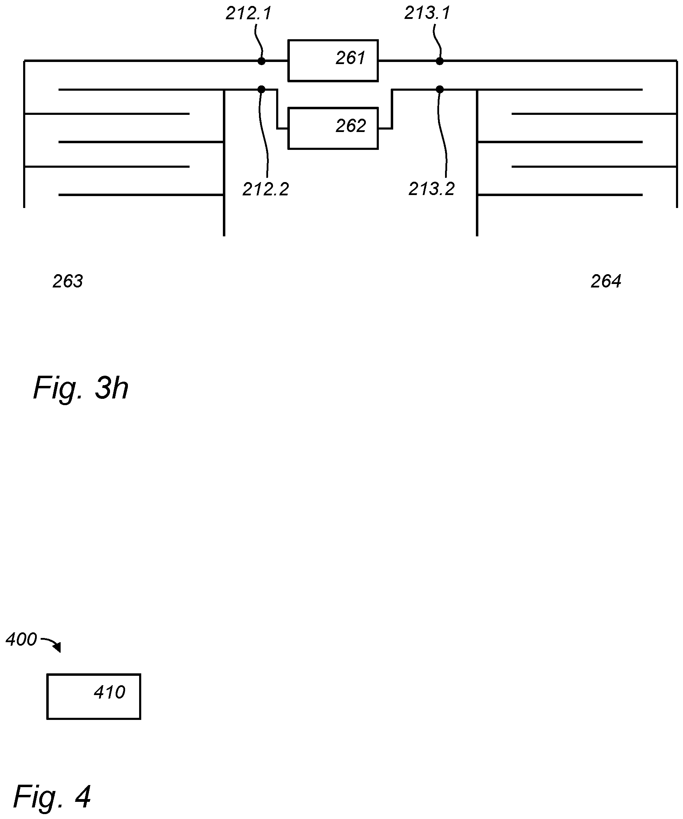

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one electrode, e.g., the electrically conductive electrode, is applied to a substrate. The electrode being arranged in a pattern across the substrate. The cited paper discloses two different grid patterns a regular hive and a regular ladder design. See table 1 and figure 3 of the cited paper. An electrical emergency energy storage according to an embodiment may be included herein.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C during 15 min. On top of these silver grids, one or two layers of PEDOT:PSS SV3 were posteriorly printed by screen printing. An electrical emergency energy storage according to an embodiment may be included herein.

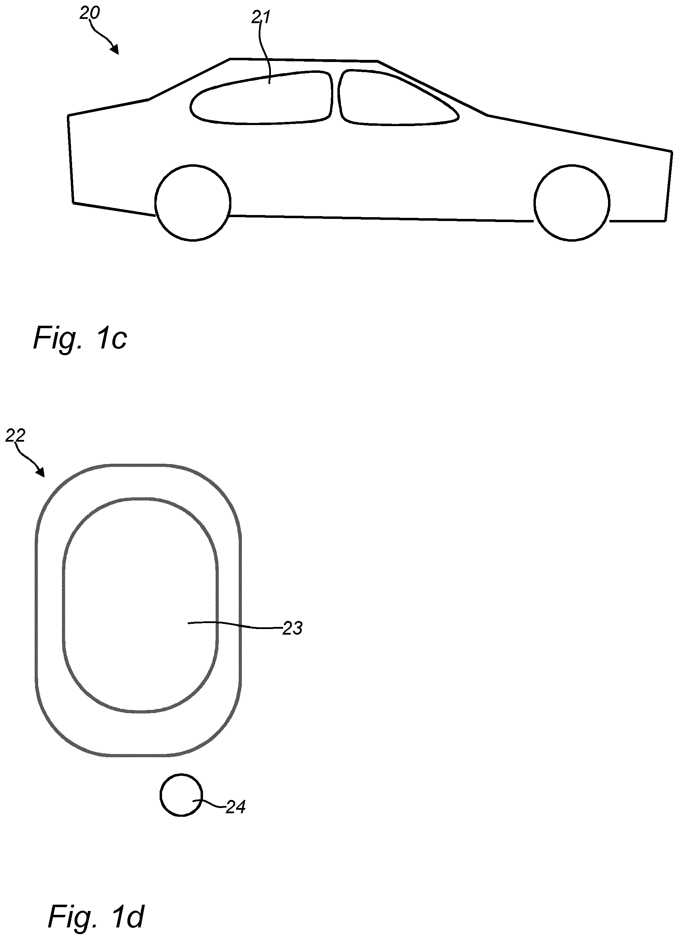

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is issued for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. An electrical emergency energy storage according to an embodiment may be included herein.

A substrate according to an embodiment can be beneficially applied in a number of other technologies. For example, the light modulator may be dielectrophoretic light modulator, e.g., as shown in US20050185104 A1, included herein by reference. An electrical emergency energy storage according to an embodiment may be included herein.

A substrate as in an embodiment may also be used in other electrowetting and OLED applications. In OLED and electrowetting one needs electrodes on only one of the substrates. The substrate with electrodes may be according to an embodiment including an electrical emergency energy storage.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. An electrical emergency energy storage according to an embodiment may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. An electrical emergency energy storage according to an embodiment may be included herein.

In an application of the light modulator for glazing both substrates are typically transparent.

**Figure 1a** schematically shows an embodiment of a light modulator 10, which may be applied in dynamic glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. Light modulator 10 may be provided with an electrical emergency energy storage according to an embodiment.

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule.

The electrodes are arranged for driving particles 30 to move towards or away from electrodes, depending on the electric field applied. The optical properties, in particular the transparency or reflectivity of the light modulator, depend on the location of particles 30 in the fluid. For example, a connection may be provided for applying an electro-magnetic field to the electrodes.

At least one, but preferably both electrodes 13 and 14 are according to an embodiment, though they are shown schematically in the figures.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5*10⁻⁷-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 µm.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity □r of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 n□m (at 273K; for comparison typically used ITO has 105 n□m), which is similar to an electrical conductivity >1*10⁷ S/m at 20°C). In an embodiment of the light modulator electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electro-magnetic field to the electrodes, wherein the applied electro-magnetic field to the electrodes provides movement of the nano- and microparticles from a first electrode to a second electrode and vice versa. A connection for applying an electro-magnetic field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electro-magnetic field. As such also the appearance of the light modulator, or one or more parts thereof, may be changed. For example, a segment may have an area of at least 1mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For dynamic glazing, a light modulator may be used with or without segments. For example, applied in dynamic glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 1b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 1a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 1b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with an electrical emergency energy storage according to an embodiment.

**Figure 1c** schematically shows an example of an embodiment of a car 20 having dynamic glazing for windows 21. Dynamic glazing is advantageous for cars and since while driving the level of incident lighting can change often and rapidly. Using dynamic glazing in a car has the advantage that light levels can be maintained at a constant level by adjusting the transparency of the car windows.

In an embodiment, the car, or any other vehicle with dynamic glazing, comprises an electrical emergency energy storage connected to the light modulator of the dynamic glazing. This allows an emergency increase in transparency in case of a loss of connection to the main power supply. For example, the emergency increase may be triggered in case of an accident of the vehicle.

Without power the transparency of dynamic glazing will decrease. The speed with which this happens depends on the particular dynamic glazing employed. For example, in a particle-based system the particles will naturally diffuse thus decreasing the transparency. It may also be the case that transparency was low at the moment of power loss because of a setting by a user.

Incorporating an emergency feature that automatically increases transparency in dynamic glazing in the event of a power loss is advantageous for safety reasons; for example, it ensures that occupants have visibility and can orient themselves or evacuate if necessary during an emergency. It avoids the risk of egress paths being obscured, which is important in situations like fires where power failure may occur, and clear vision is helpful for a safe exit. This feature also allows for the entry of natural light and visibility for first responders, which can be important in accidents involving power outage.

**Figure 1d** schematically shows an example of an embodiment of an airplane window 22, comprising a light modulator 23. The system may provide optional controls 24 to allow a user of the window to change optical properties, e.g., transparency.

The dynamic glazing for the aircraft window may be configured to ensure an increase in transparency during defined states of the aircraft, e.g., including during aircraft take-off, aircraft landing, and a state of turbulence during the flight, using the main power supply and/or emergency energy storage as needed.

Incorporating dynamic glazing with an automatic transparency feature in aircraft windows enhances safety. During emergency situations where power supply may be disrupted, the system ensures that the windows become more transparent, maintaining visibility for both passengers and crew. This functionality is particularly important during stages of flight such as take-off and landing, when the ability to see outside the aircraft can be important for orientation and evacuation procedures. Furthermore, the emergency energy storage ensures that, even in the case of a power failure, the aircraft's windows remain transparent, allowing for natural light entry and aiding both passengers' and rescue personnel's visibility.

Dynamic glazing can also be used in other glazing applications, especially, where the amount of incident light is variable, e.g., buildings, offices, houses, green houses, skylights. Skylights are windows arranged in the ceiling to allow sunlight to enter the room.

The light modulator may have at least two optical states, e.g., a transparent state and a non-transparent state, or a non-reflective state and a reflective state; the non-reflective state may be more transparent than the reflective state. Typically, the light modulator also supports further grayscales. The light modulator, e.g., light modulator 10 or light modulator 40 may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

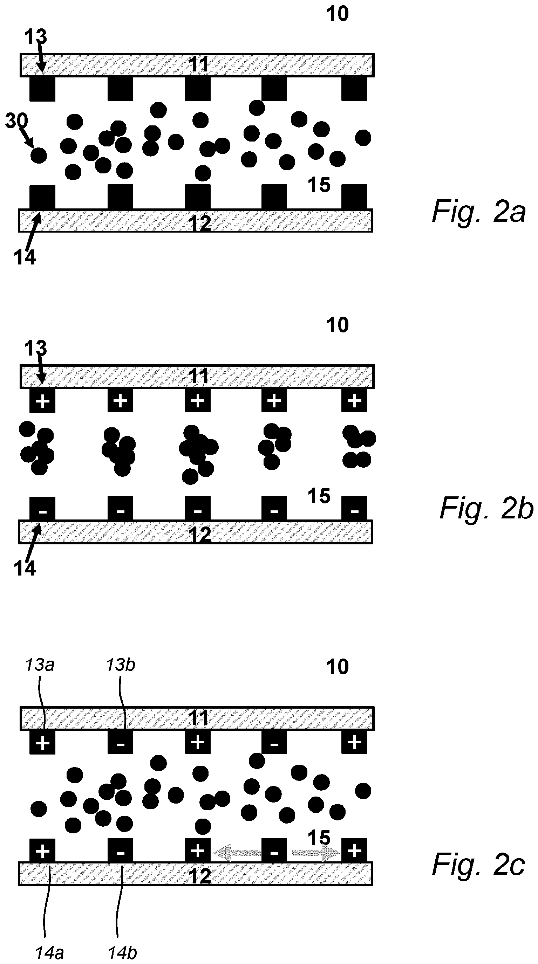

**Figures 2a-2c** schematically show a side view of an embodiment of a light modulator in use. The emergency energy storage is not shown separately in these figures.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune gray scaling and driving to non-transparent or reflective state. Multiple electrodes may also be used to support multiple segments on the substrate.

**Figure 2a** shows the light modulator without an electric field being applied. No electric force is yet applied on particles 30 suspended in fluid 15, in figure 2a.

In the configuration shown in figure 2a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 2b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency can be achieved, when in a second instance, P2, of the on-state, the voltages of the top electrodes and bottom electrodes are reversed in contrast to the instance of P1. In the instance P2, the voltage of each electrode on of the top substrate is now supplied with a negative potential -V1 while the voltages of the aligned electrodes of the bottom substrate are supplied with a positive potential. This state is similar to the state shown in figure 2b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 2b (and a negative potential on electrodes 14), and a positive potential at electrodes at the bottom substrate, e.g., as shown as electrodes 14 in figure 2b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform, the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 2c** shows how a state of decreased transparency or increased reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 2c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 2b, a waveform may be applied to the electrodes, e.g., so that electrodes that are shown in figure 2b with a positive potential become negative and vice versa. As in figure 2b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figure 1a.

The extent with which transparency or reflectivity is increased or decreased in figures 2b and 2c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent off-set in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less response to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light, comprises applying an electric potential to multiple electrodes applied to two opposing substrates according to an embodiment to obtain an electro-magnetic field between the multiple electrodes providing electrophoretic movement of the particles towards or from one of the multiple electrodes causing modulation of light shining through the substrates, wherein the two opposing substrates are as in an embodiment.

Various modes of operation are supported by an embodiment of a four-electrode light modulator system.

### Horizontal drive

Horizontal drive is a mode in which lateral electric fields are created along the substrate. The light modulator may apply alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping, due to the particles dispersing, then briefly the electrodes and may be driven as in vertical drive.

In all three modes, the driving may use DC or AC signals. Preferably, AC signals are used.

**Figure 3a** schematically shows an example of an embodiment of dynamic glazing system 200. Shown in figure 3a is a light modulator 210. Light modulator 210 may, e.g., be any of the light modulators shown herein. In normal use, light modulator 210 is powered from a main power supply 220 which is connected to system 200 through a main power supply connection 242. For example, power may be obtained from conventional power sources, e.g., an alternating or direct current main power supply, possibly after applying a power converter, e.g., transformer and/or frequency converter. The power source may, e.g., be a conventional household power source, an onboard electrical power system, e.g., for an aircraft, possibly obtained from engine-driven generators, a vehicle's electrical system supported by the vehicle battery and/or alternator.

For example, light modulator 210 may comprise an optical layer comprising a fluid comprising particles, and one or more electrodes. An electric potential may be applied to the one or more electrodes to obtain an electric field at the one or more electrodes providing movement of the particles towards or from the one more electrodes effecting an increase in transparency or a decrease in transparency.

System 200 also comprises an electrical emergency energy storage 230. Light modulator 210 may be driven from emergency energy storage 230 instead of from main power supply 220.

System 200 is configured for an emergency increase in transparency in case of a loss of connection to the main power supply, by applying energy from the emergency energy storage 230 to the light modulator 210.

For example, an electrode based light modulator may apply an electric potential from the main power supply when available, including in non-emergency use, and from the electrical emergency energy storage in case the connection 242 to the main power supply is severed, e.g., to effect the emergency increase in transparency.

In an embodiment, in the event of a system power failure, the energy storage automatically drives the light modulator to a predefined open state, e.g., a state of the light modulator with increased transparency, e.g., a predefined high transparency state.

Typically, the dynamic glazing system 200 comprises a controller configured to control the light modulator (the controller is not separately shown in figure 3a). The controller is configured to control in use the transition between states of different transparency, at least during non-emergency use. The controller may be integrated in the dynamic glazing, though it may also be an external system. For example, in an embodiment, the dynamic glazing is a standalone, or mostly standalone device, having an integrated controller. For example, in an embodiment, a controller may control multiple the dynamic glazings, e.g., in an office building.

For example, the emergency energy storage may be placed along contact pads of the dynamic glazing for connecting the dynamic glazing to the main power supply. For example, the emergency energy storage may be placed in a frame of the light modulator, inside an insulating layer, and so on.

There are various choices possible for the emergency energy storage. For example, in an embodiment the emergency energy storage comprises one or more of: a battery, a capacitor, a thin-film battery. The emergency energy storage may be chargeable, e.g., chargeable from the main power supply, e.g., during non-emergencies.

For example, the light modulator and/or controller may comprise a voltage sensor configured to detect when the voltage in the main power supply drops below a certain threshold indicating a power outage. If a power outage is detected a switching mechanism causes a switch from main power to emergency energy storage. For example, the switching mechanism may comprise a relay or an electronic switch, such as a transistor, solid-state relay, or MOSFET, etc. In an embodiment, the voltage sensor may detect a return of power, and cause a switch back to main power; however, in an embodiment, the switch back requires manual intervention.

In an embodiment, the emergency increase in transparency is maintained for at least a predetermined time. The predetermined time may be determined from the desired transparency, light modulator technology, and energy storage type. For example, a worst-case time may be computed by assuming the light modulator is fully non-transparent at the moment of emergency. If the transparency at the moment of emergency happened to be high, the emergency transparency may be maintained for longer.

For example, a desired emergency increase duration may be a design choice, or may be determined by regulations. For example, the emergency increase duration may be at least 10 minutes, at least 30 minutes, at least 1 hour, etc.

Interestingly, the light modulator may also be transitioned into a permanent high-transparent state. In effect, the light modulator is broken by sacrificing the ability to reduce transparency. For example, in an embodiment, the emergency energy storage provides high power to the light modulator causing a permanent transition to a high-transparent state; for example, an electric field to the one or more electrodes arranged to cause the permanent transition.

The desired transparency depends on the application, and also on the desired duration. For example, the transparent state obtained from the emergency increase may have at least 10% transparency. But higher or lower target transparency is possible.

In an embodiment, the emergency increase in transparency is triggered by a loss of connection to the main power supply, e.g., as detected by the dynamic glazing and/or its controller. Emergency increase may also be triggered by other events. If such trigger events happen while there is a connection to the main power supply, then power from the main power supply may be used for the emergency increase. However, once main power supply is lost, the emergency increase may be powered from the emergency power storage. Target transparency may differ depending on the power source. If the emergency increase is powered from emergency storage, then a lower transparency may be aimed for than if the main power supply may be used. In the latter case, the target transparency may be full transparency supported by the light modulator.

For example, the emergency increase may be triggered from an emergency system. For example, in an embodiment, the dynamic glazing and/or its controller may be connected to an emergency system and configured to monitor the emergency system. The emergency increase may be effected in case of an emergency signal from the emergency system and/or a loss of connection with the emergency system.

For example, the emergency system may comprise an airbag, a smoke detector, burglar alarm, fire alarm, and the like.

In an embodiment, the dynamic glazing and/or its controller may comprise a sound sensor configured to detect the presence of an audible alarm signal and to effect the emergency increase when such is detected. For example, the alarm signal may be, e.g., a smoke detector alarm signal, a carbon monoxide detector alarm, burglar alarm, a video surveillance alarm home, etc. For example, an increase over a threshold in volume in a range of frequencies typically used by alarms may be detected. For example, an increase over 80 dB within the range of 2 kHz to 4 kHz. The threshold and range may be selected empirically by testing against alarm sounds.

In an embodiment, the emergency energy storage may be charged from the main power supply.

In an embodiment, the dynamic glazing monitors the status of the emergency energy storage and sounds a visual or audible alarm if the emergency energy store falls below an energy threshold required to increase the transparency above a transparency threshold. For example, a monitor sensor may comprise a voltage sensor to measure a voltage of the storage, e.g., a battery. Another option is coulomb counting, also known as the current integration method. For example, a battery management system (BMS) may be configured to monitor the emergency energy storage, e.g., using a combination of voltage measurement and coulomb counting, or the like.

**Figure 3b** schematically shows an example of an embodiment of dynamic glazing system 201. System 201 is a refinement of embodiment disclosed with respect to figure 3a, e.g., system 200. Shown in figure 3b is a controller 240 configured to control the transition between states of different transparency. The light modulator is connectable to main power supply 220 through controller 240. Control 240 is connected to light modulator 210 through an interconnect 241. For example, interconnect 241 may be connected to electrodes of light modulator 210 to control a potential thereon, which in turns allows controlling the transparency of light modulator 210.

System 201 comprises a first emergency energy storage 231 configured to power the controller in case of a loss of connection between the main power supply and the controller. If connection 242 between controller 240 and main power supply 220 is broken, then first emergency energy storage 231 allows the controller to continue controlling transparency for some more time, and effect the emergency increase transparency of the light modulator.

For example, the emergency energy storage 231 may be integrated with controller 240.

**Figure 3c** schematically shows an example of an embodiment of dynamic glazing system 202. System 202 is a refinement of embodiment disclosed with respect to figure 3a, e.g., system 200 System 202 comprises a second emergency energy storage 232. Light modulator 210 is configured to increase transparency using energy from the second emergency energy storage 232 in case of power outage, e.g., of main power supply 220. In this case no controller is needed.

Again there are various possibilities for the energy storage, as mentioned herein. A particular advantageous choice is thin-film circuits built into the light modulator, e.g., during the manufacturing process. For example, the thin-film circuits may be deposited on a surface of the light modulator.

In an embodiment, the light modulator 210 comprises an optical layer of particle type. For example, this may be an electrophoretic optical layer wherein particles are moved due to the electrophoretic effect. A dielectrophoretic optical layer is also possible.

For example, the light modulator may comprise
- a first substrate and a second substate facing each other, one or more electrodes extending in a two-dimensional pattern across the first substrate and/or one or more electrodes extending in a two-dimensional pattern across the second substrate, and
- an optical layer comprising a fluid comprising particles, arranged between the first substrate and the second substrate.

For example, each substrate may comprise two interdigitated electrodes, such as shown in figure 1a for example. The optical layer may be driven, e.g., as explained with reference to figures 2a-2c. Note, arrangements with fewer than four electrodes are possible

Interestingly, the second electrical emergency energy storage may be arranged between the electrodes on the first substrate, e.g., including a first electrode, and the electrodes on the second substrate, e.g. a second electrode. The first and second electrode being aligned with each other on opposite substrates. When second emergency energy storage 232 is triggered for the emergency increase, then storage 232 can then cause a potential difference between the electrodes on the first substrate and the electrodes on the second substrate, e.g., between the first electrode and the second electrode. Such a potential difference would cause the light modulator to open.

In case of the emergency increase, the electrodes on either substrate could be connected together to form one electrode.

**Figure 3d** schematically shows an example of an embodiment of dynamic glazing system 203. System 201 is a refinement of embodiment disclosed with respect to figures 3a-3c. System 203 comprises both a first emergency energy storage 231, and a second emergency energy storage 232. Light modulator 210 is connected to a controller 240 through an interconnect 241. Controller 240 connects the light modulator through a connection 242 to the main power supply.

In the event of an interconnection failure, e.g., in interconnect 241, second energy storage 232 on light modulator 210 may automatically drive the emergency increase in transparency for light modulator 210, e.g., towards a second predefined open state.

In the event of a main power outage, e.g., in connection 242, first energy storage 231 on light modulator 210 may automatically drive the emergency increase in transparency for light modulator 210, e.g., towards a first predefined open state.

The first predefined open state, or transparent state, may have a higher transparency than the second predefined open state.

**Figure 3e** schematically shows an example of an embodiment of dynamic glazing system 204. The induction points disclosed with respect to figure 3e may be applied in embodiment according to any one of figures 3a-3d.

In the event of a light modulator breakage or failure, the light modulator may fail to transition to the open state. This eventuality may be countered by installing inductive coupling points 211. Inductive coupling points 211 may be Qi coupling points.

Inductive coupling points 211 may be defined on the inside and/or outside of the device, to allow emergency activation of the light modulator.

Multiple sets of induction points may be arranged in the light modulator. Figure 3e shows four of them, in the four corners of the light modulator. More or fewer is also possible. Having multiple sets is advantageous if electrodes in the light modulator are broken which may locally inhibit driving of the light modulator from emergency energy storage 232. Each set of induction points may be associated with a second emergency energy storage, e.g., located near the induction points. Power from the local emergency energy storage may be used to locally drive the light modulator to increased transparency.

Inductive coupling points 211 may be configured to wirelessly receive an activation signal from an external inductive device 250. The wirelessly received activation signal may then effect the emergency increase and/or triggering the use of the emergency energy storage, e.g., second emergency energy storage 232.

For example, drive patterns may be applied to the light modulator via the one or more inductive coupling points.

For example, external inductive device 250 may trigger the inductive coupling points 211. Light modulator 210 is configured to drive towards increased transparency in response.

In an embodiment, the inductive coupling points are further configured to wirelessly receive power from the external inductive device 250 for the emergency increase. For example, a local second energy storage may be charged from the external inductive device 250, e.g., through Qi points, which in turn may drive the light modulator, at least in part towards increased transparency.

**Figure 3f** schematically shows an example of an embodiment of dynamic glazing system.

Shown in figure 3f are two substrates. In this case, on each substrate are two interdigitated electrodes, to control an optical layer in between the substrates. More or fewer electrodes are possible, e.g., depending on the type of optical layer. The four-electrode arrangement shown is for example suitable for an electrophoretic system using a particle based optical layer.

Induction points are attached to each of the electrodes on the first substrate. In this arrangement, a first induction point 212.1 is attached to a first electrode on the first substrate, a second induction point 212.2 is attached to a second electrode on the first substrate.

Induction points are attached to each of the electrodes on the second substrate. In this arrangement, a first induction point 213.1 is attached to a first electrode on the second substrate, a second induction point 213.2 is attached to a second electrode on the second substrate.

Having an induction point for each electrode on the outside allows full control over the light modulator, with an external device such as device 250. This may be wireless control; For example, the induction points may be Qi points. The control may also be wired. For example, one or more connectors may be arranged on the outside of the light modulator that allows attachment of an external device. In particular, a second emergency energy storage may be controlled through induction points.

**Figure 3g** schematically shows an example of an embodiment of electrodes and induction points. By connecting a wireless device like device 250 a potential may be applied to the electrodes on a substrate, thus allowing control over the optical layer. In particular the optical layer may be opened, e.g., its transparency may be increased.

In figure 3f the induction points are shown on their respective substrate, but the induction points from one substrate may be connected, e.g., wired, to the same location on the opposite substrate of the light modulator, or in fact any location on the dynamic glazing. This facilitates driving all electrodes on all substrates from one location.

Figures 3f and 3g do not separately show the emergency energy storage. For example, one or more emergency energy storages may be associated with each set of induction points.

For example, four induction points may be utilized in this configuration. Multiple sets of induction points can be established, enabling the induction of a potential on the electrodes from various positions. This multi-point induction is beneficial because a fracture within the light modulator could lead to an interruption in conductivity. Such a discontinuity would mean that the potential applied at the induction points might not be distributed across the entire surface of the light modulator, leaving sections of it in a default, non-transparent state.

The implementation of multiple induction points mitigates the risk of localized failure, ensuring that if one pathway for the potential is compromised, alternative pathways can maintain the functionality of the system. This redundancy allows for the activation of the dynamic glazing mechanism from numerous locations, facilitating a consistent and reliable transition from opaque to transparent states across the entirety of the light modulator's surface.

**Figure 3h** schematically shows an example of an embodiment of electrodes and induction points. At 263 electrodes on a first substrate are shown, in this case two interdigitated electrodes. At 264 electrodes on a second substrate are shown, in this case two interdigitated electrodes. In use, the electrodes of 263 and 264 would be on opposite substrates and aligned with each other.

Figure 3h shows two emergency energy storages: first emergency energy storage 261 and second emergency energy storage 262. Emergency energy storage 261 is arranged between electrodes that are aligned with each other but on opposite substrates. Induction points 212.1 and 213.1 are schematically shown. Emergency energy storage 261 may be triggered from induction points 212.1 and/or 213.1. In an embodiment, emergency energy storage 261 may be charged from induction points 212.1 and/or 213.1, especially wirelessly charged.

One emergency energy storage arranged between two opposite electrodes is sufficient to cause at least partial transparency; sufficient to drive the light modulator from fully opaque to partial transparency.

In an embodiment, an emergency energy storage is optionally arranged between the other pairs of opposite electrodes as well. For example, figure 3h shows second emergency energy storage 262, and induction points 212.2 and 213.2.

Storages 261 and 262 may be combined. In this case, when the emergency increase is triggered all electrodes on the same surface are connected, thus forming one electrode per substrate, which are driven with an opposite voltage.

Note that the arrangement shown in figure 3h does not allow driving the light modulator from transparent to opaque. This is not a disadvantage as such driving is not needed in case of emergency. Once the emergency is over, e.g., power is restored, the regular driving mechanism of the dynamic glazing can restore the light modulator to an opaque state if desired.

The induction points are connected to the emergency energy storage. Emergency energy storage 261 and/or 262 may be combined with a charging mechanism. This allows charging storage 261 and/or 262 from device 250. This allows the dynamic glazing to stay open for longer even after device 250 is removed.

Induction points combined with storage and/or charging may also be applied to the electrodes multiple times, e.g., across the surface of the dynamic glazing. This allows the light modulator to be opened from multiple locations on the light modulator, which is advantageous in case the electrodes are broken.

**Figure 4** schematically shows an example of an embodiment of a dynamic glazing method 400 for dynamic glazing supporting multiple states of different transparency, the dynamic glazing comprises a light modulator connectable to a main power supply. Method 400 may be computer implemented and comprises, in case of a loss of connection to the main power supply, applying (410) an emergency increase in transparency in case of a loss of connection to the main power supply by applying energy from the emergency energy storage to the light modulator.

Many different ways of executing the method are possible, as will be apparent to a person skilled in the art. Embodiments of the method may be executed using software, which comprises instructions for causing a processor system to perform an embodiment of method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

A processor may be included in a controller of the dynamic glazing, which controller may or may not be integrated into the dynamic glazing. A processor may be included in the dynamic glazing itself, e.g., in or near the light modulator.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

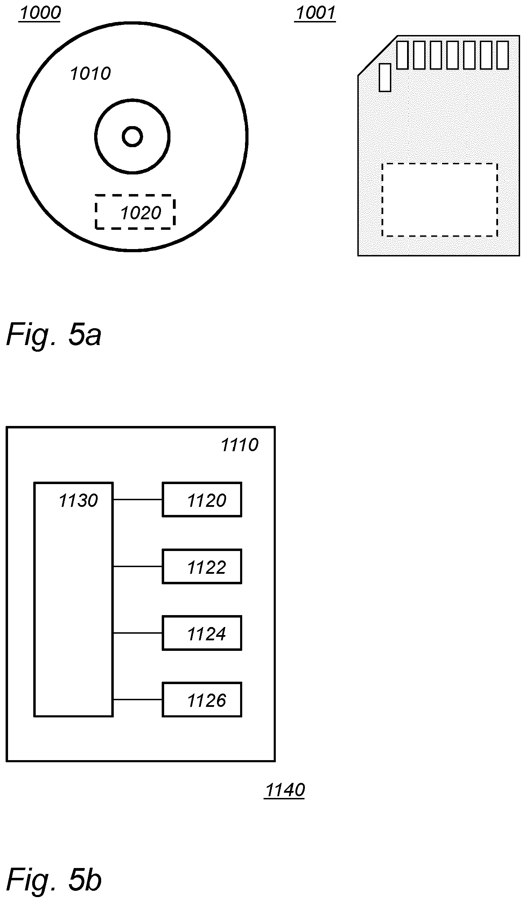

**Figure 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a dynamic glazing method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method of <main claim preamble>.

**Figure 5b** shows in a schematic representation of a processor system 1140 according to an embodiment. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the dynamic glazing may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. Dynamic glazing supporting multiple states of different transparency, the dynamic glazing comprising
- a light modulator connectable to a main power supply, the light modulator being configured to dynamically adjust its transparency using energy from a main power supply,
- a connection to an electrical emergency energy storage, the dynamic glazing being configured for an emergency increase in transparency in case of a loss of connection to the main power supply by applying energy from the emergency energy storage to the light modulator.

2. Dynamic glazing as in Claim 1, wherein the light modulator comprises,
- an optical layer comprising a fluid comprising particles,
- one or more electrodes, an electric potential being applied to the one or more electrodes to obtain an electric field at the one or more electrodes providing movement of the particles towards or from the one more electrodes effecting an increase in transparency or a decrease in transparency, the dynamic glazing being configured to apply the electric potential from the main power supply in non-emergency use, and from the electrical emergency energy storage for the emergency increase in transparency.

3. Dynamic glazing as in any of the preceding claims, wherein the dynamic glazing is connectable to the main power supply through a controller configured to control the light modulator, the controller being configured to control in use the transition between states of different transparency.

4. Dynamic glazing as in Claim 3, wherein the electrical emergency energy storage comprises a first electrical emergency energy storage configured to power the controller in case of a loss of connection between the main power supply and the controller, the controller being configured to emergency increase transparency of the dynamic glazing in that case.

5. Dynamic glazing as in any of the preceding claims, wherein the electrical emergency energy storage comprises a second electrical emergency energy storage comprised in the dynamic glazing, the dynamic glazing being configured to increase transparency using energy from the second emergency energy storage.

6. Dynamic glazing as in Claim 5 and any one of Claim 3 and Claim 4, wherein the controller is external to the dynamic glazing and connected thereto through an interconnect, the dynamic glazing being configured to emergency increase transparency in case of a loss of connection in the interconnect using energy from the second electrical emergency energy storage.

7. Dynamic glazing as in Claim 5, wherein the light modulator comprises,
- first substrate and a second substate facing each other, one or more electrodes extending in a two-dimensional pattern across the first substrate and/or one or more electrodes extending in a two-dimensional pattern across the second substrate, and
- an optical layer comprising a fluid comprising particles, arranged between the first substrate and the second substrate, wherein
- the second electrical emergency energy storage being arranged between at least a first electrode on the first substrate and at least a second electrode on the second substrate and being configured to arrange a different potential on at least a first electrode and the at least a second electrode effecting the emergency increase in transparency.

8. Dynamic glazing as in any of the preceding claims, wherein
- the emergency energy storage comprises a battery, and/or
- the emergency energy storage comprises a capacitor, and/or
- the emergency energy storage comprises a thin-film battery, and/or
- the emergency energy storage is placed along contact pads of the dynamic glazing for connecting the dynamic glazing to the main power supply.

9. Dynamic glazing as in any of the preceding claims, wherein
- the emergency increase in transparency is maintained for at least a predetermined time, or
- the emergency energy storage provides an electric field to the one or more electrodes causing a permanent transition to a high-transparent state.

10. Dynamic glazing as in any of the preceding claims, wherein the dynamic glazing comprises an aircraft window for an aircraft, wherein the dynamic glazing is configured to ensure an increase in transparency during defined states of the aircraft, e.g., including during aircraft take-off, aircraft landing, and a state of turbulence during the flight, using the main power supply and/or emergency energy storage as needed.

11. Dynamic glazing as in any of the preceding claims, wherein the dynamic glazing comprises a vehicle window for a vehicle, wherein the dynamic glazing is configured to ensure the emergency increase in transparency in case of an accident of the vehicle.

12. Dynamic glazing as in any of the preceding claims, wherein the transparent state obtained from the emergency increase has at least 10% transparency.

13. Dynamic glazing as in any of the preceding claims, wherein the dynamic glazing is connected to an emergency system and configured to monitor the emergency system, wherein the emergency increase is effected in case of an emergency signal from the emergency system and/or a loss of connection with the emergency system.

14. Dynamic glazing as in any of the preceding claims, wherein the emergency system comprises an airbag and/or a smoke detector.

15. Dynamic glazing as in any of the preceding claims, wherein the dynamic glazing comprises inductive coupling points configured to wirelessly receive an activation signal from an external inductive device, the wirelessly received activation signal effecting the emergency increase and/or triggering use of the emergency energy storage.

16. Dynamic glazing as in Claim 15, wherein the inductive coupling points are further configured to wirelessly receive power from the external inductive device for the emergency increase.

17. Dynamic glazing as in any of the preceding claims, wherein the dynamic glazing comprises sound sensors configured to detect the presence of an audible alarm signal, e.g., a smoke detector alarm signal, a carbon monoxide detector alarm, burglar alarm, a video surveillance alarm home, and to effect the emergency increase when such is detected.

18. Dynamic glazing as in any of the preceding claims, wherein the dynamic glazing includes one or more monitor sensors that detect the status of the emergency energy storage system and sounds a visual or audible alarm if the emergency energy store falls below an energy threshold required to increase the transparency above a transparency threshold.

19. A dynamic glazing system supporting multiple states of different transparency, the dynamic glazing system comprising
- a light modulator connectable to a main power supply, the light modulator being configured to dynamically adjust its transparency using energy from a main power supply,
- a controller configured to control the light modulator, the controller being configured to control in use the transition between states of different transparency, the dynamic glazing being connected to the main power supply through the controller, and
- an electrical emergency energy storage connected to the controller and/or light modulator, the dynamic glazing being configured for an emergency increase in transparency in case of a loss of connection to the main power supply by applying energy from the emergency energy storage to the light modulator.

20. Method (400) for dynamic glazing, the dynamic glazing supporting multiple states of different transparency, the dynamic glazing comprises a light modulator connectable to a main power supply, the
- in case of a loss of connection to the main power supply, applying (410) an emergency increase in transparency in case of a loss of connection to the main power supply by applying energy from the emergency energy storage to the light modulator.

21. A transitory or non-transitory computer storage medium encoded with instructions that, when executed by one or more computers, cause the one or more computers to perform the method according to claim 20.
